# EUROPÄISCHE PATENTSCHRIFT

(11) **EP 2 954 282 B1**
(45) Veröffentlichungstag und Bekanntmachung des Hinweises auf die Patenterteilung: **15.03.2017**
(21) Anmeldenummer: 14703061.3
(22) Anmeldetag: 04.02.2014
(51) Int. Cl.: G01B 3/06, G01B 3/56

(54) **GLIEDERMASSSTAB UND VERFAHREN ZUR WINKELMESSUNG**
FOLDING RULE AND METHOD FOR MEASURING ANGLES
MÈTRE PLIANT ET PROCÉDÉ POUR LA MESURE D'ANGLES

(30) Priorität: 05.02.2013 DE 102013201877
(43) Veröffentlichungstag der Anmeldung: 16.12.2015
(73) Patentinhaber: Neugärtner, Mario, 99195 Eckstedt (DE)
(72) Erfinder: Neugärtner, Mario, 99195 Eckstedt (DE)
(74) Vertreter: Liedtke, Markus
(86) Internationale Anmeldenummer: PCT/EP2014/052155
(87) Internationale Veröffentlichungsnummer: WO 2014/122130

(56) Entgegenhaltungen:
- WO-A1-2012/044180
- CH-A- 431 108
- CH-A- 439 768
- DE-C- 834 903

## Beschreibung

Die Erfindung betrifft einen Gliedermaßstab nach den Merkmalen des Oberbegriffs des Anspruchs 1 und Verfahren zur Winkelmessung nach den Merkmalen des Oberbegriffs des Anspruchs 9.

Aus dem Stand der Technik sind Gliedermaßstäbe zum Messen von Längenabmessungen allgemein bekannt. Des Weiteren sind Winkelmesser allgemein bekannt.

Die CH 439 768 A beschreibt ein als Mehrzweckmessgerät ausgebildetes, zusammenklappbares Metermaß. Ein Endschenkel von zwei äußeren, zur Einstellung eines Winkels dienenden Klappschenkeln ist mit einem Ende an einer Skala eines an einem zweiten Schenkel anschließenden dritten und vierten Schenkels, die mit den beiden äußeren Schenkeln ein Dreieck bilden, anhand der Skala auf jeden gewünschten Winkel einstellbar. Ferner sind Metermaß-Skalen weitere, mit diesen korrespondierende Skalen zugeordnet, welche anhand des Metermaßes ermittelten Messgrößen entsprechend, durch eine bestimmte arithmetische oder mathematische Operation ermittelte Werte angeben.

Die DE 834 903 C beschreibt einen Gliedermaßstab mit Mitteln zur Winkelmessung, wobei von einem dritten und vierten Glied mindestens das vierte Glied an seiner Oberkante eine Teilung hat, die in Zusammenwirkung mit einer Ecke am freien Ende eines ersten Gliedes beim Falten der beiden ersten Glieder über den in gestreckter Lage befindlichen dritten und vierten Gliedern eine Größe eines zwischen den ersten beiden Gliedern eingestellten Winkels angibt.

Der Erfindung liegt die Aufgabe zu Grunde, einen gegenüber dem Stand der Technik verbesserten Gliedermaßstab und ein gegenüber dem Stand der Technik verbessertes Verfahren zur Winkelmessung anzugeben.

Die Aufgabe wird erfindungsgemäß gelöst durch einen Gliedermaßstab mit den Merkmalen des Anspruchs 1 und ein Verfahren zur Winkelmessung mit den Merkmalen des Anspruchs 9.

Vorteilhafte Ausgestaltungen der Erfindung sind Objekt der Unteransprüche.

Ein Gliedermaßstab umfasst zumindest vier schwenkbar aneinander befestigte Glieder, wobei zumindest das vierte Glied zwei Skalen zur Winkelmessung aufweist und das erste Glied zumindest eine Ablesemarkierung aufweist.

Dabei sind die erste Skale zur Winkelmessung und die Ablesemarkierung derart auf dem jeweiligen Glied angeordnet, dass die Ablesemarkierung auf den Wert der ersten Skale zeigt, welcher dem zu messenden Winkel zwischen Schenkeln entspricht, die am zweiten Glied bzw. am vierten Glied anliegen, genauer gesagt an einer ersten Seitenkante des zweiten Gliedes bzw. des vierten Gliedes anliegen, wenn das erste Glied und das vierte Glied parallel zueinander ausgerichtet sind und eine erste Seitenkante oder eine zweite Seitenkante des ersten Gliedes an einer ersten Seitenkante des vierten Gliedes anliegt. Zweckmäßigerweise sind die zweite Skale zur Winkelmessung und die Ablesemarkierung derart auf dem jeweiligen Glied angeordnet, dass die Ablesemarkierung auf den Wert der zweiten Skale zeigt, welcher dem zu messenden Winkel zwischen Schenkeln entspricht, die am dritten Glied bzw. am vierten Glied anliegen, genauer gesagt an einer ersten Seitenkante des dritten Gliedes bzw. des vierten Gliedes anliegen, wenn das erste Glied und das vierte Glied parallel zueinander ausgerichtet sind und eine zweite Seitenkante des ersten Gliedes an einer zweiten Seitenkante des vierten Gliedes anliegt.

Dass die Schenkel des zu messenden Winkels am zweiten Glied bzw. am vierten Glied anliegen bedeutet, dass einer der Schenkel des Winkels am zweiten Glied anliegt und der andere Schenkel am vierten Glied anliegt.

Dass die Schenkel des zu messenden Winkels am dritten Glied bzw. am vierten Glied anliegen bedeutet, dass einer der Schenkel des Winkels am dritten Glied anliegt und der andere Schenkel am vierten Glied anliegt.

In einem erfindungsgemäßen Verfahren zur Winkelmessung mittels eines solchen Gliedermaßstabs werden das erste Glied und das vierte Glied des Gliedermaßstabs parallel zueinander ausgerichtet, wobei die erste Seitenkante oder die zweite Seitenkante des ersten Gliedes an die erste Seitenkante des vierten Gliedes angelegt wird, wobei die erste Seitenkante des zweiten Gliedes und die zweite Seitenkante des vierten Gliedes an jeweils einen Schenkel des zu messenden Winkels angelegt werden und wobei ein Winkelwert an der Position der ersten Skale zur Winkelmessung zumindest auf dem vierten Glied abgelesen wird, auf welche die Ablesemarkierung auf dem ersten Glied zeigt. Alternativ werden das erste Glied und das vierte Glied des Gliedermaßstabes parallel zueinander ausgerichtet und mit zweiten Seitenkanten aneinander gelegt, wobei erste Seitenkanten des dritten Gliedes und des vierten Gliedes an jeweils einen Schenkel des zu messenden Winkels angelegt werden und wobei ein Winkelwert an der Position der zweiten Skale zur Winkelmessung zumindest auf dem vierten Glied abgelesen wird, auf welche die Ablesemarkierung auf dem ersten Glied zeigt.

Der erfindungsgemäße Gliedermaßstab und das erfindungsgemäße Verfahren ermöglichen das Messen von Winkeln, so dass für eine derartige Winkelmessung kein zusätzliches Messgerät, beispielsweise in Form eines separaten Winkelmessers, erforderlich ist. Dies ist beispielsweise für Handwerker vorteilhaft, da diese üblicherweise einen Gliedermaßstab mit sich führen und mittels des erfindungsgemäßen Gliedermaßstabs nicht nur die üblichen Längenmessungen, sondern zusätzlich auch Winkelmessungen durchführen können. Das Mitführen eines separaten Winkelmessgerätes kann auf diese Weise vermieden werden.

Die erste Variante des erfindungsgemäßen Verfahrens, bei welcher das erste Glied und das vierte Glied des Gliedermaßstabs parallel zueinander ausgerichtet werden, wobei die erste Seitenkante oder die zweite Seitenkante des ersten Gliedes an die erste Seitenkante des vierten Gliedes angelegt wird, wobei die erste Seitenkante des zweiten Gliedes und die zweite Seitenkante des vierten Gliedes an jeweils einen Schenkel des zu messenden Winkels angelegt werden und wobei ein Winkelwert an der Position der ersten Skale zur Winkelmessung zumindest auf dem vierten Glied abgelesen wird, auf welche die Ablesemarkierung auf dem ersten Glied zeigt, ermöglicht das Messen von erhabenen Winkeln, auch als überstumpfe Winkel bezeichnet. Beispielweise sind auf diese Weise Winkel von Objekten durch Anlegen des Gliedermaßstabs auf die beschriebene Weise an Außenseiten des jeweiligen Objektes zu messen, beispielsweise an Außenseiten aneinander angrenzender Außenwände eines Gebäudes, welche in einem entsprechenden Winkel zueinander ausgerichtet sind. Sind Innenseiten des Objektes, beispielsweise des Gebäudes, parallel zu den Außenseiten ausgerichtet, so kann auf diese Weise auch der entsprechende Winkel im Objekt oder Gebäude gemessen werden, welcher möglicherweise für den Gliedermaßstab nicht zugänglich ist. Der Wert dieses innenliegenden Winkels wird berechnet, indem die Differenz aus 360° und dem auf die beschriebene Weise außen ermittelten Winkelwert gebildet wird.

Die zweite Variante des Verfahrens, bei welcher das erste Glied und das vierte Glied des Gliedermaßstabes parallel zueinander ausgerichtet und mit zweiten Seitenkanten aneinander gelegt werden, wobei erste Seitenkanten des dritten Gliedes und des vierten Gliedes an jeweils einen Schenkel des zu messenden Winkels angelegt werden und wobei ein Winkelwert an der Position der zweiten Skale zur Winkelmessung zumindest auf dem vierten Glied abgelesen wird, auf welche die Ablesemarkierung auf dem ersten Glied zeigt, ermöglicht das Messen von spitzen Winkeln, rechten Winkeln und stumpfen Winkeln. Beispielweise sind auf diese Weise Winkel von Objekten durch Anlegen des Gliedermaßstabs auf die beschriebene Weise an Innenseiten des jeweiligen Objektes zu messen, beispielsweise an Innenseiten aneinander angrenzender Wände eines Gebäudes, welche in einem entsprechenden Winkel zueinander ausgerichtet sind. Sind Außenseiten des Objektes, beispielsweise des Gebäudes, parallel zu den Innenseiten ausgerichtet, so kann auf diese Weise auch der entsprechende Winkel an den Außenseiten des Objektes gemessen werden, welcher möglicherweise für den Gliedermaßstab nicht zugänglich ist. Der Wert dieses außenliegenden Winkels wird berechnet, indem die Differenz aus 360° und dem auf die beschriebene Weise innen ermittelten Winkelwert gebildet wird.

In beiden Fällen kann die jeweilige Skale, d. h. für die erste Variante die erste Skale und für die zweite Variante die zweite Skale, in einer vorteilhaften Ausführungsform auch beide Winkelwerte aufweisen, so dass nicht die Differenzbildung durchzuführen ist, sondern der gemessene Winkelwert und der aus der Differenzbildung resultierende Winkelwert an der Skale abgelesen werden können. Alternativ können die erste Skale und/oder die zweite Skale auch nur den aus der Differenzbildung resultierenden Winkelwert aufweisen, so dass dieser Winkelwert nicht berechnet werden muss, sondern direkt von der jeweiligen Skale abgelesen werden kann. In diesem Fall müsste dann bei Bedarf der jeweils andere, auf die oben beschriebene Weise eigentlich gemessene Winkelwert durch eine entsprechende Umrechnung berechnet werden.

In einer Ausführungsform des Gliedermaßstabs kann der Gliedermaßstab beispielsweise auch lediglich die erste Skale oder lediglich die zweite Skale aufweisen. In diesem Fall könnte dann jedoch entsprechend lediglich die erste Variante bzw. lediglich die zweite Variante des Verfahrens durchgeführt werden. Daher ist die Ausführungsform, in welcher der Gliedermaßstab beide Skalen aufweist, deutlich vorteilhafter, da auf diese Weise eine größere Anzahl von Verwendungsmöglichkeiten gegeben ist.

In einer möglichen Ausgestaltung setzen sich die beiden Skalen zumindest auf ein fünftes Glied des Gliedermaßstabs fort, bevorzugt auch auf ein sechstes Glied des Gliedermaßstabs. Auf diese Weise wird die Winkelmessung über einen sehr großen Winkelwertebereich hinweg ermöglicht. Sollte der zu messende Winkel dann einen Winkelwert aufweisen, bei welchem das Anlegen des ersten Gliedes an das vierte Glied des Gliedermaßstabs nicht möglich ist, so tritt in dem oben beschriebenen Verfahren an die Stelle des vierten Gliedes, je nach dem jeweiligen Winkelwert des zu messenden Winkels, entweder das fünfte Glied oder das sechste Glied des Gliedermaßstabes, wobei dann, wenn an Stelle des vierten Gliedes das fünfte Glied verwendet wird, die Glieder des Gliedermaßstabes derart geschwenkt werden, dass das vierte und das fünfte Glied in einer Linie hintereinander ausgerichtet sind, und wenn an Stelle des vierten Gliedes das sechste Glied verwendet wird, die Glieder des Gliedermaßstabes derart geschwenkt werden, dass das vierte, das fünfte und das sechste Glied in einer Linie hintereinander ausgerichtet sind. Das vierte und das fünfte Glied bzw. das vierte, fünfte und sechste Glied wirken dann zusammen als ein verlängertes viertes Glied.

In einer weiteren möglichen Ausgestaltung ist die erste Skale im Bereich der ersten Seitenkante zumindest des vierten Gliedes und die zweite Skale im Bereich der zweiten Seitenkante zumindest des vierten Gliedes angeordnet. Auf diese Weise wird die Ablesung des jeweiligen Winkelwertes erleichtert, da die Ablesemarkierung stets unmittelbar an der in der jeweiligen Verfahrensvariante verwendeten Skale anliegt.

Insbesondere ist ein Abstand einer zweiten Schwenkachse, über welche das zweite Glied und das dritte Glied schwenkbar aneinander befestigt sind, zu einem Rand der der zweiten Schwenkachse nächstgelegenen Stirnseite des dritten Gliedes höchstens so groß wie der geringste Abstand der zweiten Schwenkachse zu einer ersten Seitenkante des zweiten Gliedes und/oder ein Abstand der zweiten Schwenkachse zu einem Rand der der zweiten Schwenkachse nächstgelegenen Stirnseite des zweiten Gliedes ist vorzugsweise höchstens so groß wie der geringste Abstand der zweiten Schwenkachse zu einer ersten Seitenkante des dritten Gliedes. Auf diese Weise ist sichergestellt, dass das Anlegen der ersten Seitenkante des dritten Gliedes an den jeweiligen Schenkel des zu messenden Winkels nicht durch einen Überstand des zweiten Gliedes behindert ist bzw. es ist sichergestellt, dass das Anlegen der ersten Seitenkante des zweiten Gliedes an den jeweiligen Schenkel des zu messenden Winkels nicht durch einen Überstand des dritten Gliedes behindert ist. Dadurch sind Messfehler verhindert.

In einer möglichen Ausgestaltung ist ein Abstand einer dritten Schwenkachse, über welche das dritte Glied und das vierte Glied schwenkbar aneinander befestigt sind, zu einem Rand der der dritten Schwenkachse nächstgelegenen Stirnseite des dritten Gliedes und zu einem Rand der der dritten Schwenkachse nächstgelegenen Stirnseite des vierten Gliedes gleich groß und höchstens so groß wie der geringste Wert des Abstandes der dritten Schwenkachse zu einer ersten Seitenkante des dritten Gliedes und zu einer ersten Seitenkante des vierten Gliedes. Dadurch ist sichergestellt, dass das Anlegen der ersten Seitenkante des dritten Gliedes und des vierten Gliedes an den jeweiligen Schenkel des zu messenden Winkels nicht durch einen Überstand des vierten Gliedes bzw. des dritten Gliedes behindert ist. Auf diese Weise sind Messfehler vermieden.

Gemäß einer Weiterbildung erstreckt sich die zumindest eine Ablesemarkierung über eine gesamte Breite des ersten Gliedes. Dadurch sind ein sicheres Ablesen der Skalen und eine sichere Zuordnung der Ablesemarkierung zu einem jeweiligen Wert auf der jeweiligen Skale ermöglicht, sowohl in der ersten als auch in der zweiten Variante des Verfahrens.

Der Gliedermaßstab ist in einer weiteren Ausgestaltung aus Holz, Kunststoff und/oder Metall ausgebildet. Dies ermöglicht eine einfache und kostengünstige Herstellung eines robusten und verschleißbeständigen Gliedermaßstabs.

In einer weiteren möglichen Ausgestaltung weist der Gliedermaßstab zumindest eine Längenmessskale auf den Gliedern auf. Dies ermöglicht die Doppelfunktion des erfindungsgemäßen Gliedermaßstabes, so dass dieser sowohl zur Winkelmessung als auch zur Längenmessung verwendbar ist.

Gemäß einer Weiterbildung ist die Längenmessskale auf einer von den Skalen zur Winkelmessung abgewandten Flachseite des Gliedermaßstabs angeordnet. Dadurch sind die beiden Funktionen des Gliedermaßstabs voneinander getrennt, so dass eine Verwechslungsgefahr vermieden ist und ein einfaches und sicheres Ablesen des jeweiligen Längen- oder Winkelwertes und dadurch eine sichere Längenermittlung bei einer Längenmessung und eine sichere Winkelermittlung bei einer Winkelmessung ermöglicht sind.

Ausführungsbeispiele der Erfindung werden im Folgenden anhand von Zeichnungen näher erläutert.

Darin zeigen:
- Figur 1: schematisch ein erstes Ausführungsbeispiel eines Gliedermaßstabs und ein erstes Objekt mit einem zu messenden Winkel,
- Figur 2: schematisch ein erstes Ausführungsbeispiel eines Gliedermaßstabs und ein weiteres Objekt mit einem zu messenden Winkel,
- Figur 3: schematisch ein zweites Ausführungsbeispiel eines Gliedermaßstabs und ein erstes Objekt mit einem zu messenden Winkel, und
- Figur 4: schematisch ein zweites Ausführungsbeispiel eines Gliedermaßstabs und ein weiteres Objekt mit einem zu messenden Winkel.

Einander entsprechende Teile sind in allen Figuren mit den gleichen Bezugszeichen versehen.

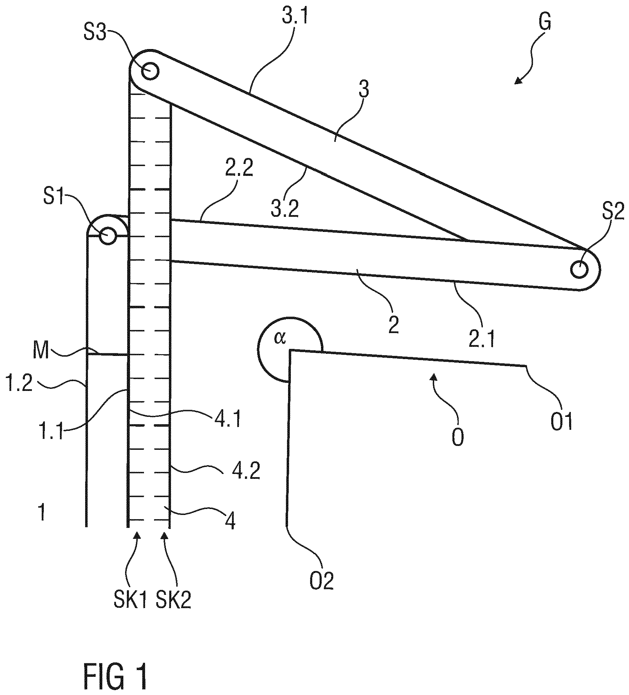

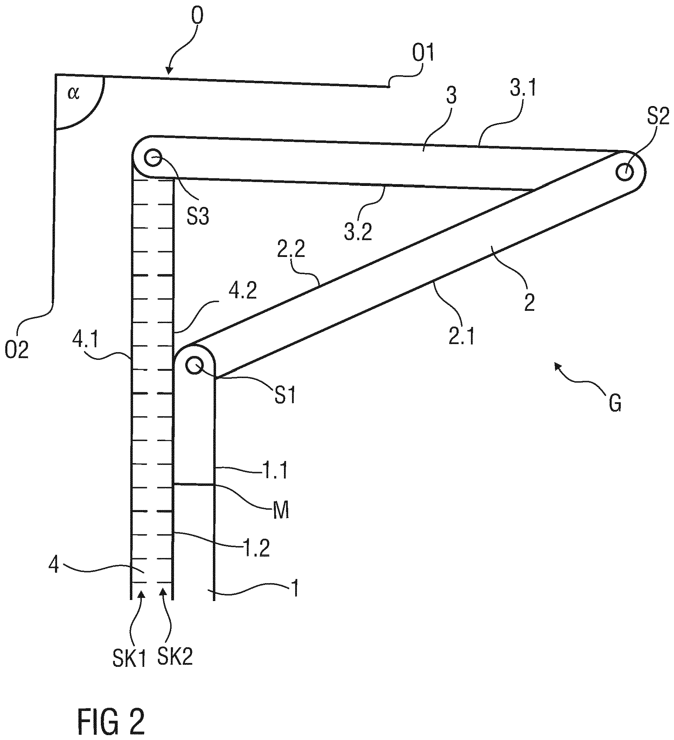

Die Figuren 1 und 2 zeigen jeweils ein erstes Ausführungsbeispiel eines Gliedermaßstabs G, welcher zur Winkelmessung nutzbar ist, in den beiden Beispielen jeweils zur Messung eines Winkels α an einem Objekt O. Dabei ist das Objekt O jeweils schematisch stark vereinfacht dargestellt, da lediglich anhand des jeweiligen Winkels α die Funktion des Gliedermaßstabs G zur Winkelmessung erläutert werden soll.

Der in den Figuren beispielhaft dargestellte Gliedermaßstab G, auch als Gliedergelenkmaßstab bezeichnet, umfasst zumindest vier schwenkbar aneinander befestigte Glieder 1, 2, 3, 4, welche jeweils eine gleiche Länge aufweisen. Aus Gründen der Übersichtlichkeit sind hier lediglich diese vier Glieder 1, 2, 3, 4 dargestellt, welche für die im Folgenden noch näher erläuterte Winkelmessung mindestens erforderlich sind. Vorteilhafterweise weist der Gliedermaßstab G in hier nicht dargestellten Ausführungsformen zumindest noch ein fünftes Glied oder bevorzugt zumindest noch ein fünftes und ein sechstes Glied auf. Die sich daraus ergebenden Vorteile werden im Folgenden noch erläutert. Der Gliedermaßstab G kann natürlich noch weitere Glieder umfassen.

Die Glieder 1, 2, 3, 4 des Gliedermaßstabs G weisen jeweils zwei sich gegenüberliegende Seitenkanten 1.1, 1.2, 2.1, 2.2, 3.1, 3.2, 4.1, 4.2 auf. Die schwenkbare Befestigung der Glieder 1, 2, 3, 4 ist jeweils im Bereich von Stirnseiten der Glieder 1, 2, 3, 4 positioniert und als Schwenkachse S1, S2, S3 ausgebildet, über welche jeweils zwei der Glieder 1, 2, 3, 4 schwenkbar miteinander verbunden sind. Diese Schwenkachsen S1, S2, S3 sind beispielsweise als Nieten ausgebildet.

Zumindest das vierte Glied 4 weist, wie hier dargestellt, zwei Skalen SK1, SK2 zur Winkelmessung auf und das erste Glied 1 weist eine Ablesemarkierung M auf. Dabei sind, wie in Figur 1 dargestellt, die erste Skale SK1 zur Winkelmessung und die Ablesemarkierung M derart auf dem jeweiligen Glied 4, 1 angeordnet, dass die Ablesemarkierung M auf den Wert der ersten Skale SK1 zeigt, welcher dem zu messenden Winkel α zwischen Schenkeln O1, O2 entspricht, die an dem zweiten Glied 2 bzw. an dem vierten Glied 4 anliegen, genauer gesagt an der ersten Seitenkante 2.1, 4.1 des zweiten Gliedes 2 bzw. des vierten Gliedes 4 anliegen, wenn das erste Glied 1 und das vierte Glied 4 parallel zueinander ausgerichtet sind und im in Figur 1 dargestellten Beispiel die erste Seitenkante 1.1 des ersten Gliedes 1 oder in einem nicht dargestellten Beispiel die zweite Seitenkante 1.2 des ersten Gliedes 1 an der ersten Seitenkante 4.1 des vierten Gliedes 4 anliegt.

Die zweite Skale SK2 zur Winkelmessung und die Ablesemarkierung M sind, wie in Figur 2 dargestellt, derart auf dem jeweiligen Glied 4, 1 angeordnet, dass die Ablesemarkierung M auf den Wert der zweiten Skale SK2 zeigt, welcher dem zu messenden Winkel α zwischen den Schenkeln O1, O2 entspricht, die an dem dritten Glied 3 bzw. an dem vierten Glied 4 anliegen, genauer gesagt an der ersten Seitenkante 3.1, 4.1 des dritten Gliedes 3 bzw. des vierten Gliedes 4 anliegen, wenn das erste Glied 1 und das vierte Glied 4 parallel zueinander ausgerichtet sind und eine zweite Seitenkante 1.2 des ersten Gliedes 1 an einer zweiten Seitenkante 4.2 des vierten Gliedes 4 anliegt.

In einem mittels des Gliedermaßstabs G durchzuführenden Verfahren zur Winkelmessung werden in einer ersten Variante, wie in Figur 1 dargestellt, das erste Glied 1 und das vierte Glied 4 des Gliedermaßstabs G parallel zueinander ausgerichtet, wobei, wie in Figur 1 dargestellt, die erste Seitenkante 1.1 des ersten Gliedes 1 oder in einer hier nicht dargestellten Ausführungsform die zweite Seitenkante 1.2 des ersten Gliedes 1 an die erste Seitenkante 4.1 des vierten Gliedes 4 angelegt wird, wobei die erste Seitenkante 2.1 des zweiten Gliedes 2 und die zweite Seitenkante 4.2 des vierten Gliedes 4 an jeweils einen Schenkel O1, O2 des zu messenden Winkels α angelegt werden und wobei ein Winkelwert an der Position der ersten Skale SK1 zur Winkelmessung zumindest auf dem vierten Glied 4 abgelesen wird, auf welche die Ablesemarkierung M auf dem ersten Glied 1 zeigt. Diese erste Variante des Verfahrens ist zur Messung des in Figur 1 dargestellten Winkels α geeignet. Hierfür ist der Gliedermaßstab G, welcher in Figur 1 aus Gründen der Übersichtlichkeit noch vom Objekt O beabstandet dargestellt ist, auf die oben beschriebene Weise an das Objekt O anzulegen, d. h. an Außenseiten des Objektes O, welche die Schenkel O1, O2 des zu messenden Winkels α bilden.

Alternativ werden, wie in Figur 2 dargestellt, das erste Glied 1 und das vierte Glied 4 des Gliedermaßstabes G parallel zueinander ausgerichtet und mit zweiten Seitenkanten 1.2, 4.2 aneinander gelegt, wobei erste Seitenkanten 3.1, 4.1 des dritten Gliedes 3 und des vierten Gliedes 4 an jeweils einen Schenkel O1, O2 des zu messenden Winkels α angelegt werden und wobei ein Winkelwert an der Position der zweiten Skale SK2 zur Winkelmessung zumindest auf dem vierten Glied 4 abgelesen wird, auf welche die Ablesemarkierung M auf dem ersten Glied 1 zeigt.

Diese zweite Variante des Verfahrens ist zur Messung des in Figur 2 dargestellten Winkels α geeignet. Hierfür ist der Gliedermaßstab G, welcher in Figur 2 aus Gründen der Übersichtlichkeit noch vom Objekt O beabstandet dargestellt ist, auf die oben beschriebene Weise an das Objekt O anzulegen, d. h. an Innenseiten des Objektes O, welche die Schenkel O1, O2 des zu messenden Winkels α bilden.

Der Gliedermaßstab G und das Verfahren ermöglichen das Messen von Winkeln α, so dass für eine derartige Winkelmessung kein zusätzliches Messgerät, beispielsweise in Form eines separaten Winkelmessers, erforderlich ist. Dies ist beispielsweise für Handwerker vorteilhaft, da diese üblicherweise einen Gliedermaßstab G mit sich führen und mittels des auf die beschriebene Weise ausgebildeten Gliedermaßstab G nicht nur die üblichen Längenmessungen, sondern zusätzlich auch Winkelmessungen durchführen können. Das Mitführen eines separaten Winkelmessgerätes kann auf diese Weise vermieden werden.

Die in Figur 1 dargestellte erste Variante des Verfahrens ermöglicht das Messen von erhabenen Winkeln, auch als überstumpfe Winkel bezeichnet. Derartige erhabene oder überstumpfe Winkel weisen jeweils einen Winkelwert von größer als 180° und kleiner als 360° auf. In Figur 1 ist der zu messende Winkel α als ein solcher erhabener oder überstumpfer Winkel ausgebildet. Beispielweise sind auf diese Weise Winkel α von Objekten O durch Anlegen des Gliedermaßstabs G auf die beschriebene Weise an Außenseiten des jeweiligen Objektes O zu messen, welche in einem entsprechenden Winkel zueinander ausgerichtet sind, beispielsweise an Außenseiten aneinander angrenzender Außenwände eines Gebäudes. Sind Innenseiten des Objektes O, beispielsweise des Gebäudes, parallel zu den Außenseiten ausgerichtet, so kann auf diese Weise auch der entsprechende Winkel im Objekt O ermittelt werden, welcher möglicherweise für den Gliedermaßstab G nicht zugänglich ist. Der Wert dieses innenliegenden Winkels wird berechnet, indem die Differenz aus 360° und dem auf die beschriebene Weise außen ermittelten Winkelwert gebildet wird.

Die in Figur 2 dargestellte zweite Variante des Verfahrens ermöglicht das Messen von spitzen Winkeln, rechten Winkeln und stumpfen Winkeln. In Figur 2 ist der zu messende Winkel α als ein solcher spitzer Winkel ausgebildet, welcher hier nahezu ein rechter Winkel ist. Beispielsweise sind auf diese Weise Winkel α von Objekten O durch Anlegen des Gliedermaßstabs G auf die beschriebene Weise an Innenseiten des jeweiligen Objektes O zu messen, welche in einem entsprechenden Winkel zueinander ausgerichtet sind, beispielsweise an Innenseiten aneinander angrenzender Wände eines Gebäudes. Sind Außenseiten des Objektes O, beispielsweise des Gebäudes, parallel zu den Innenseiten ausgerichtet, so kann auf diese Weise auch der entsprechende Winkel an den Außenseiten des Objektes O ermittelt werden, welcher möglicherweise für den Gliedermaßstab G nicht zugänglich ist. Der Wert dieses außenliegenden Winkels wird berechnet, indem die Differenz aus 360° und dem auf die beschriebene Weise innen ermittelten Winkelwert gebildet wird.

In beiden Fällen kann die jeweilige Skale SK1, SK2, d. h. für die erste Variante die erste Skale SK1 und für die zweite Variante die zweite Skale SK2, in einer vorteilhaften Ausführungsform auch beide Winkelwerte aufweisen, so dass nicht die Differenzbildung durchzuführen ist, sondern der gemessene Winkelwert und der aus der Differenzbildung resultierende Winkelwert an der jeweiligen Skale SK1, SK2 direkt abgelesen werden können. Alternativ können die erste Skale SK1 und/oder die zweite Skale SK2 auch nur den aus der Differenzbildung resultierenden Winkelwert aufweisen, so dass dieser Winkelwert nicht berechnet werden muss, sondern direkt von der jeweiligen Skale SK1, SK2 abgelesen werden kann. In diesem Fall müsste dann bei Bedarf der jeweils andere, auf die oben beschriebene Weise eigentlich gemessene Winkelwert durch eine entsprechende Umrechnung berechnet werden.

In einer Ausführungsform des Gliedermaßstabs G kann der Gliedermaßstab G beispielsweise auch lediglich die erste Skale SK1 oder lediglich die zweite Skale SK2 aufweisen. In diesem Fall könnte dann jedoch entsprechend lediglich die erste Variante bzw. lediglich die zweite Variante des Verfahrens durchgeführt werden. Daher ist die Ausführungsform, in welcher der Gliedermaßstab G beide Skalen SK1, SK2 aufweist, deutlich vorteilhafter, da auf diese Weise eine größere Anzahl von Verwendungsmöglichkeiten gegeben sind.

Zweckmäßigerweise setzen sich die beiden Skalen SK1, SK2 in hier nicht dargestellten Ausführungsformen zumindest auf ein fünftes Glied des Gliedermaßstabs G fort, bevorzugt auch auf ein sechstes Glied des Gliedermaßstabs G. Auf diese Weise wird die Winkelmessung über einen sehr großen Winkelwertebereich hinweg ermöglicht. Ist dies der Fall, so sind die Skalen SK1, SK2 auf diesen nachfolgenden Gliedern zweckmäßigerweise ebenso positioniert wie auf dem vierten Glied 4. Sollte der zu messende Winkel α dann einen Winkelwert aufweisen, bei welchem das Anlegen des ersten Gliedes 1 an das vierte Glied 4 des Gliedermaßstabs G nicht möglich ist, so tritt in dem oben beschriebenen Verfahren an die Stelle des vierten Gliedes 4, je nach dem jeweiligen Winkelwert des zu messenden Winkels α, entweder das fünfte Glied oder das sechste Glied des Gliedermaßstabes G, wobei dann, wenn an Stelle des vierten Gliedes 4 das fünfte Glied verwendet wird, das vierte Glied 4 und das fünfte Glied des Gliedermaßstabes G derart geschwenkt werden, dass das vierte Glied 4 und das fünfte Glied in einer Linie hintereinander ausgerichtet sind, und wenn an Stelle des vierten Gliedes 4 das sechste Glied verwendet wird, das vierte Glied 4 sowie das fünfte und sechste Glied des Gliedermaßstabes G derart geschwenkt werden, dass das vierte Glied 4, das fünfte Glied und das sechste Glied in einer Linie hintereinander ausgerichtet sind. D. h. das fünfte Glied und, wenn vorhanden, das sechste Glied des Gliedermaßstabs G bilden auf diese Weise ein verlängertes viertes Glied des Gliedermaßstabs G, so dass das Verfahren in beiden Varianten auf die oben beschriebene Weise mit dem verlängerten vierten Glied an Stelle des vierten Gliedes 4 durchführbar ist.

Die erste Skale SK1 ist im Bereich der ersten Seitenkante 4.1 des vierten Gliedes 4 und die zweite Skale SK2 im Bereich der zweiten Seitenkante 4.2 des vierten Gliedes 4 angeordnet. Auf diese Weise wird die Ablesung des jeweiligen Winkelwertes erleichtert, da die Ablesemarkierung M stets unmittelbar an der in der jeweiligen Verfahrensvariante verwendeten Skale SK1, SK2 anliegt.

Ein Abstand der zweiten Schwenkachse S2, über welche das zweite Glied 2 und das dritte Glied 3 schwenkbar aneinander befestigt sind, zu einem Rand der der zweiten Schwenkachse S2 nächstgelegenen Stirnseite des dritten Gliedes 3 ist höchstens so groß wie der geringste Abstand der zweiten Schwenkachse S2 zur ersten Seitenkante 2.1 des zweiten Gliedes 2. Auf diese Weise ist sichergestellt, dass in der in Figur 1 dargestellten ersten Variante des Verfahrens das Anlegen der ersten Seitenkante 2.1 des zweiten Gliedes 2 an den ersten Schenkel O1 des zu messenden Winkels α nicht durch einen Überstand des dritten Gliedes 3 über die erste Seitenkante 2.1 des zweiten Gliedes 2 behindert wird.

Ein Abstand der zweiten Schwenkachse S2 zu einem Rand der der zweiten Schwenkachse S2 nächstgelegenen Stirnseite des zweiten Gliedes 2 ist höchstens so groß wie der geringste Abstand der zweiten Schwenkachse S2 zur ersten Seitenkante 3.1 des dritten Gliedes 3. Auf diese Weise ist sichergestellt, dass in der in Figur 2 dargestellten zweiten Variante des Verfahrens das Anlegen der ersten Seitenkante 3.1 des dritten Gliedes 3 an den ersten Schenkel O1 des zu messenden Winkels α nicht durch einen Überstand des zweiten Gliedes 2 über die erste Seitenkante 3.1 des dritten Gliedes 3 behindert wird. Dadurch sind Messfehler verhindert.

Abstände der dritten Schwenkachse S3, über welche das dritte Glied 3 und das vierte Glied 4 schwenkbar aneinander befestigt sind, zu einem Rand der der dritten Schwenkachse S3 nächstgelegenen Stirnseite des dritten Gliedes 3 und zu einem Rand der der dritten Schwenkachse S3 nächstgelegenen Stirnseite des vierten Gliedes 4 sind gleich groß und höchstens so groß wie der geringste Wert des Abstandes der dritten Schwenkachse S3 zur ersten Seitenkante 3.1 des dritten Gliedes 3 und zur ersten Seitenkante 4.1 des vierten Gliedes 4. Dadurch ist sichergestellt, dass das Anlegen der ersten Seitenkante 3.1, 4.1 des dritten Gliedes 3 und des vierten Gliedes 4 an den jeweiligen Schenkel O1, O2 des zu messenden Winkels □ nicht durch einen Überstand des vierten Gliedes 4 über die erste Seitenkante 3.1 des dritten Gliedes 3 und nicht durch einen Überstand des dritten Gliedes 3 über die erste Seitenkante 4.1 des vierten Gliedes 4 behindert wird. Auf diese Weise sind Messfehler vermieden.

Die Ablesemarkierung M erstreckt sich über eine gesamte Breite des ersten Gliedes 1. Dadurch ist ein sicheres Ablesen der jeweiligen Skale SK1, SK2 und eine sichere Zuordnung der Ablesemarkierung M zu einem jeweiligen Wert auf der jeweiligen Skale SK1, SK2 ermöglicht, sowohl in der ersten als auch in der zweiten Variante des Verfahrens.

Der Gliedermaßstab G ist zweckmäßigerweise aus Holz, Kunststoff und/oder Metall ausgebildet. Dies ermöglicht eine einfache und kostengünstige Herstellung eines robusten und verschleißbeständigen Gliedermaßstabs G.

Zweckmäßigerweise weist der Gliedermaßstab G zumindest eine Längenmessskale auf seinen Gliedern 1, 2, 3, 4 auf. Dies ermöglicht die Doppelfunktion des Gliedermaßstabes G, so dass dieser sowohl zur Winkelmessung als auch zur Längenmessung verwendbar ist. Diese Längenmessskale ist im hier dargestellten Beispiel auf einer von den Skalen SK1, SK2 zur Winkelmessung abgewandten Flachseite des Gliedermaßstabs G angeordnet und daher hier nicht sichtbar. Durch diese Anordnung der Längenmessskale sind die beiden Funktionen des Gliedermaßstabs G voneinander getrennt, so dass eine Verwechslungsgefahr vermieden ist und ein einfaches und sicheres Ablesen des jeweiligen Längen- oder Winkelwertes und dadurch eine sichere Längenermittlung bei einer Längenmessung und eine sichere Winkelermittlung bei einer Winkelmessung ermöglicht ist.

Zudem ist durch den Einsatz dieses Gliedermaßstabs G ein zusätzliches Messgerät zur Winkelmessung, beispielsweise ein Winkelmesser, nicht mehr erforderlich. Dies gilt insbesondere dann, wenn der Gliedermaßstab G zusätzlich die Längenmessskale aufweist, so dass auch die allgemein bekannten Messaufgaben, nämlich insbesondere die Längenmessung, mit dem Gliedermaßstab G erfüllt werden können. Dadurch ist ein Kostenaufwand, Logistikaufwand und Transportaufwand reduziert. Beispielsweise Handwerker müssen auf diese Weise lediglich ein Messgerät statt zwei verschiedene Messgeräte mit sich führen, um erforderliche Messaufgaben durchzuführen.

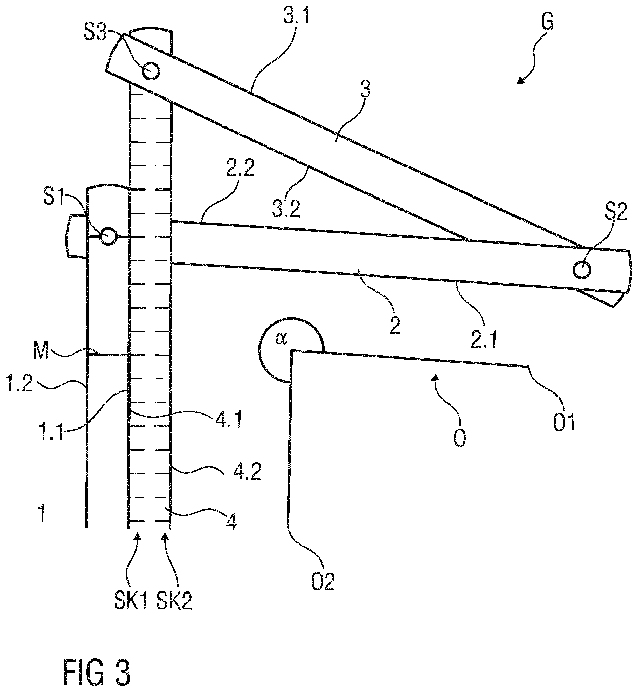

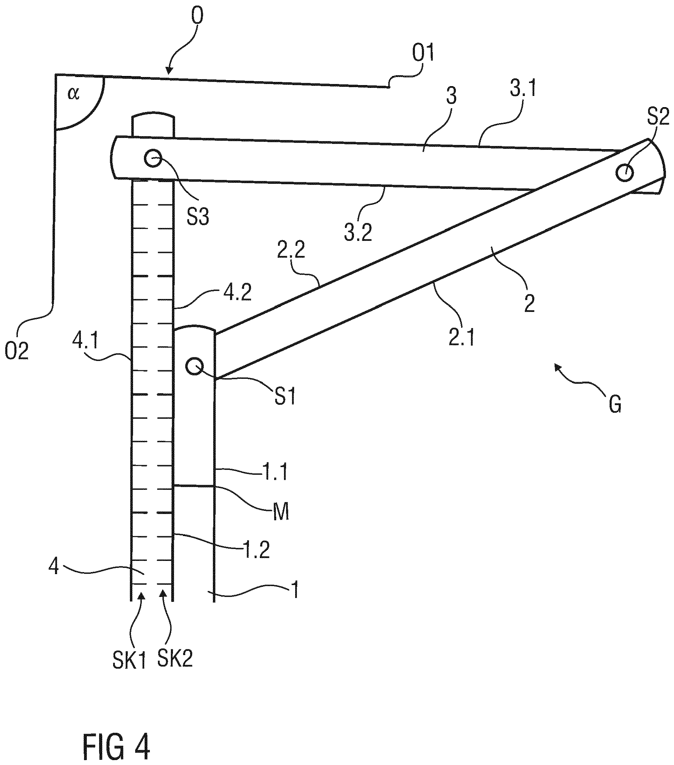

In den Figuren 3 und 4 ist jeweils ein zweites Ausführungsbeispiel eines Gliedermaßstabs G, welcher zur Winkelmessung nutzbar ist, in den beiden Beispielen jeweils zur Messung eines Winkels α an einem Objekt O dargestellt.

Im Unterschied zu dem in den Figuren 1 und 2 dargestellten ersten Ausführungsbeispiel sind Abstände der zweiten Schwenkachse S2 zum Rand der der zweiten Schwenkachse S2 nächstgelegenen Stirnseite des dritten Gliedes 3 und zum Rand der der zweiten Schwenkachse S2 nächstgelegenen Stirnseite des zweiten Gliedes 2 größer als der geringste Abstand der zweiten Schwenkachse S2 zur ersten Seitenkante 2.1 des zweiten Gliedes 2 und zur ersten Seitenkante 3.1 des dritten Gliedes 3. Weiterhin sind Abstände der dritten Schwenkachse S3 zum Rand der der dritten Schwenkachse S3 nächstgelegenen Stirnseite des dritten Gliedes 3 und zum Rand der der dritten Schwenkachse S3 nächstgelegenen Stirnseite des vierten Gliedes 4 größer als der geringste Wert des Abstandes der dritten Schwenkachse S3 zur ersten Seitenkante 3.1 des dritten Gliedes 3 und zur ersten Seitenkante 4.1 des vierten Gliedes 4.

Um bei dieser Ausführung Messfehler zu vermeiden, wird ein Offset-Wert zum an der Ablesemarkierung abgelesenen Wert des zu messenden Winkels α addiert.

### BEZUGSZEICHENLISTE

- 1: erstes Glied
- 1.1: erste Seitenkante des ersten Gliedes
- 1.2: zweite Seitenkante des ersten Gliedes
- 2: zweites Glied
- 2.1: erste Seitenkante des zweiten Gliedes
- 2.2: zweite Seitenkante des zweiten Gliedes
- 3: drittes Glied
- 3.1: erste Seitenkante des dritten Gliedes
- 3.2: zweite Seitenkante des dritten Gliedes
- 4: viertes Glied
- 4.1: erste Seitenkante des vierten Gliedes
- 4.2: zweite Seitenkante des vierten Gliedes

- G: Gliedermaßstab
- M: Ablesemarkierung
- O: Objekt
- O1: erster Schenkel
- O2: zweiter Schenkel
- S1: erste Schwenkachse
- S2: zweite Schwenkachse
- S3: dritte Schwenkachse
- SK1: erste Skale
- SK2: zweite Skale

- α: Winkel

## Patentansprüche

1. Gliedermaßstab (G), umfassend zumindest vier schwenkbar aneinander befestigte Glieder (1, 2, 3, 4), wobei zumindest das vierte Glied (4) zwei Skalen (SK1, SK2) zur Winkelmessung aufweist und das erste Glied (1) zumindest eine Ablesemarkierung (M) aufweist, wobei die erste Skale (SK1) zur Winkelmessung und die Ablesemarkierung (M) derart auf dem jeweiligen Glied (4, 1) angeordnet sind, dass die Ablesemarkierung (M) auf den Wert der ersten Skale (SK1) zeigt, welcher dem zu messenden Winkel (α) zwischen Schenkeln (O1, O2) entspricht, die am zweiten Glied (2) bzw. am vierten Glied (4) anliegen, wenn das erste Glied (1) und das vierte Glied (4) parallel zueinander ausgerichtet sind und eine erste Seitenkante (1.1) oder eine zweite Seitenkante (1.2) des ersten Gliedes (1) an einer ersten Seitenkante (4.1) des vierten Gliedes (4) anliegt, und dass die zweite Skale (SK2) zur Winkelmessung und die Ablesemarkierung (M) derart auf dem jeweiligen Glied (4, 1) angeordnet sind, dass die Ablesemarkierung (M) auf den Wert der zweiten Skale (SK2) zeigt, welcher dem zu messenden Winkel (α) zwischen Schenkeln (O1, O2) entspricht, die am dritten Glied (3) bzw. am vierten Glied (4) anliegen, wenn das erste Glied (1) und das vierte Glied (4) parallel zueinander ausgerichtet sind und eine zweite Seitenkante (1.2) des ersten Gliedes (1) an einer zweiten Seitenkante (4.2) des vierten Gliedes (4) anliegt.

2. Gliedermaßstab (G) nach Anspruch 1 ,
**dadurch gekennzeichnet, dass** die beiden Skalen (SK1, SK2) sich zumindest auf ein fünftes Glied des Gliedermaßstabs (G) fortsetzen.

3. Gliedermaßstab (G) nach Anspruch 1 oder 2,
**dadurch gekennzeichnet, dass** die erste Skale (SK1) im Bereich der ersten Seitenkante (4.1) zumindest des vierten Gliedes (4) und die zweite Skale (SK2) im Bereich der zweiten Seitenkante (4.2) zumindest des vierten Gliedes (4) angeordnet ist.

4. Gliedermaßstab (G) nach einem der vorhergehenden Ansprüche,
**dadurch gekennzeichnet, dass** ein Abstand einer zweiten Schwenkachse (S2), über welche das zweite Glied (2) und das dritte Glied (3) schwenkbar aneinander befestigt sind, zu einem Rand der der zweiten Schwenkachse (S2) nächstgelegenen Stirnseite des dritten Gliedes (3) höchstens so groß ist wie der geringste Abstand der zweiten Schwenkachse (S2) zu einer ersten Seitenkante (2.1) des zweiten Gliedes (2) und/oder dass ein Abstand der zweiten Schwenkachse (S2) zu einem Rand der der zweiten Schwenkachse (S2) nächstgelegenen Stirnseite des zweiten Gliedes (2) höchstens so groß ist wie der geringste Abstand der zweiten Schwenkachse (S2) zu einer ersten Seitenkante (3.1) des dritten Gliedes (3).

5. Gliedermaßstab (G) nach einem der vorhergehenden Ansprüche,
**dadurch gekennzeichnet, dass** ein Abstand einer dritten Schwenkachse (S3), über welche das dritte Glied (3) und das vierte Glied (4) schwenkbar aneinander befestigt sind, zu einem Rand der der dritten Schwenkachse (S3) nächstgelegenen Stirnseite des dritten Gliedes (3) und zu einem Rand der der dritten Schwenkachse (S3) nächstgelegenen Stirnseite des vierten Gliedes (4) gleich groß ist und höchstens so groß ist wie der geringste Wert des Abstandes der dritten Schwenkachse (S3) zu einer ersten Seitenkante (3.1) des dritten Gliedes (3) und zu einer ersten Seitenkante (4.1) des vierten Gliedes (4).

6. Gliedermaßstab (G) nach einem der vorhergehenden Ansprüche,
**dadurch gekennzeichnet, dass** sich die zumindest eine Ablesemarkierung (M) über eine gesamte Breite des ersten Gliedes (1) erstreckt.

7. Gliedermaßstab (G) nach einem der vorhergehenden Ansprüche,
**gekennzeichnet durch** zumindest eine Längenmessskale auf den Gliedern (1,2, 3, 4).

8. Gliedermaßstab (G) nach Anspruch 7,
**dadurch gekennzeichnet, dass** die Längenmessskale auf einer von den Skalen (SK1, SK2) zur Winkelmessung abgewandten Flachseite des Gliedermaßstabs (G) angeordnet ist.

9. Verfahren zur Winkelmessung mittels eines Gliedermaßstabs (G) nach einem der Ansprüche 1 bis 8,
- wobei ein erstes Glied (1) und ein viertes Glied (4) des Gliedermaßstabs (G) parallel zueinander ausgerichtet werden, wobei eine erste Seitenkante (1.1) oder eine zweite Seitenkante (1.2) des ersten Gliedes (1) an eine erste Seitenkante (4.1) des vierten Gliedes (4) angelegt wird, wobei eine erste Seitenkante (2.1) eines zweiten Gliedes (2) und eine zweite Seitenkante (4.2) des vierten Gliedes (4) an jeweils einen Schenkel (O1, O2) des zu messenden Winkels (α) angelegt werden und wobei ein Winkelwert an der Position einer ersten Skale (SK1) zur Winkelmessung zumindest auf dem vierten Glied (4) abgelesen wird, auf welche eine Ablesemarkierung (M) auf dem ersten Glied (1) zeigt, oder
- wobei ein erstes Glied (1) und ein viertes Glied (4) des Gliedermaßstabes (G) parallel zueinander ausgerichtet werden und mit zweiten Seitenkanten (1.2, 4.2) aneinander gelegt werden, wobei erste Seitenkanten (3.1, 4.1) eines dritten Gliedes (3) und des vierten Gliedes (4) an jeweils einen Schenkel (O1, O2) des zu messenden Winkels (α) angelegt werden und wobei ein Winkelwert an der Position einer zweiten Skale (SK2) zur Winkelmessung zumindest auf dem vierten Glied (4) abgelesen wird, auf welche eine Ablesemarkierung (M) auf dem ersten Glied (1) zeigt.

## Claims

1. A folding rule (G), including at least four sections (1, 2, 3, 4) which are fastened to one another so as to be pivotable, wherein at least the fourth section (4) comprises two scales (SK1, SK2) for measuring angles and the first section (1) comprises at least one reading mark (M),
wherein the first scale (SK1) for measuring angles and the reading mark (M) are arranged in such a manner on the respective section (4, 1) that the reading mark (M) points to the value of the first scale (SK1) which corresponds to the angle (α) to be measured between the sides (O1, O2) which abut against the second section (2) and against the fourth section (4), respectively, when the first section (1) and the fourth section (4) are aligned parallel to one another and a first lateral edge (1.1) or a second lateral edge (1.2) of the first section (1) abuts against a first lateral edge (4.1) of the fourth section (4), and in that the second scale (SK2) for measuring angles and the reading mark (M) are arranged in such a manner on the respective section (4, 1) that the reading mark (M) points to the value of the second scale (SK2) which corresponds to the angle (α) to be measured between the sides (O1, O2) which abut against the third section (3) and against the fourth section (4), respectively, when the first section (1) and the fourth section (4) are aligned parallel to one another and a second lateral edge (1.2) of the first section (1) abuts against a second lateral edge (4.2) of the fourth section (4).

2. The folding rule (G) as claimed in claim 1,
**characterized in that** the two scales (SK1, SK2) are continued at least onto a fifth section of the folding rule (G).

3. The folding rule (G) as claimed in claim 1 or 2, **characterized in that** the first scale (SK1) is arranged in the region of the first lateral edge (4.1) of at least the fourth section (4) and the second scale (SK2) is arranged in the region of the second lateral edge (4.2) of at least the fourth section (4).

4. The folding rule (G) as claimed in one of the preceding claims,
**characterized in that** a spacing between a second pivot axis (S2), by means of which the second section (2) and the third section (3) are fastened to one another so as to be pivotable, and an edge of the end face of the third section (3) nearest the second pivot axis (S2) is no larger than the smallest spacing between the second pivot axis (S2) and a first lateral edge (2.1) of the second section (2) and/or **in that** a spacing between the second pivot axis (S2) and an edge of the end face of the second section (2) nearest the second pivot axis (S2) is no larger than the smallest spacing between the second pivot axis (S2) and a first lateral edge (3.1) of the third section (3).

5. The folding rule (G) as claimed in one of the preceding claims,
**characterized in that** a spacing between a third pivot axis (S3), by means of which the third section (3) and the fourth section (4) are fastened to one another so as to be pivotable, and an edge of the end face of the third section (3) nearest the third pivot axis (S3) and an edge of the end face of the fourth section (4) nearest the third pivot axis (S3) is the same size as and no larger than the smallest value of the spacing between the third pivot axis (S3) and a first lateral edge (3.1) of the third section (3) and a first lateral edge (4.1) of the fourth section (4).

6. The folding rule (G) as claimed in one of the preceding claims,
**characterized in that** the at least one reading mark (M) extends over an entire width of the first section (1).

7. The folding rule (G) as claimed in one of the preceding claims,
**characterized by** at least one length measuring scale on the sections (1, 2, 3, 4).

8. The folding rule (G) as claimed in claim 7,
**characterized in that** the length measuring scale is arranged on a flat side of the folding rule (G) remote from the scales (SK1, SK2) for measuring angles.

9. A method for measuring angles by means of a folding rule (G) as claimed in one of claims 1 to 8,
- wherein a first section (1) and a fourth section (4) of the folding rule (G) are aligned parallel to one another, wherein a first lateral edge (1.1) or a second lateral edge (1.2) of the first section (1) is placed against a first lateral edge (4.1) of the fourth section (4), wherein a first lateral edge (2.1) of a second section (2) and a second lateral edge (4.2) of the fourth section (4) are each placed against a side (O1, O2) of the angle (α) to be measured and wherein an angle value is read off at least on the fourth section (4) at the position of a first scale (SK1) for measuring angles to which a reading mark (M) on the first section (1) points, or
- wherein a first section (1) and a fourth section (4) of the folding rule (G) are aligned parallel to one another and are placed side by side with second lateral edges (1.2. 4.2), wherein first lateral edges (3.1, 4.1) of a third section (3) and of the fourth section (4) are each placed against a side (O1, O2) of the angle (α) to be measured and wherein an angle value is read off at least on the fourth section (4) at the position of a second scale (SK2) for measuring angles to which a reading mark (M) on the first section (1) points.

## Revendications

1. Mètre pliant (G), comprenant au moins quatre éléments (1, 2, 3, 4) fixés l'un à l'autre de façon pivotante, dans lequel au moins le quatrième élément (4) présente deux échelles (SK1, SK2) pour la mesure d'angles et le premier élément (1) présente au moins un marquage de lecture (M), dans lequel la première échelle (SK1) pour la mesure d'angles et le marquage de lecture (M) sont disposés sur l'élément respectif (4, 1), de telle manière que le marquage de lecture (M) pointe sur la valeur de la première échelle (SK1), qui correspond à l'angle à mesurer (α) entre des branches (O1, O2), qui sont appliquées sur le deuxième élément (2) et le quatrième élément (4), respectivement, lorsque le premier élément (1) et le quatrième élément (4) sont orientés parallèlement l'un à l'autre et qu'un premier côté latéral (1.1) ou un deuxième côté latéral (1.2) du premier élément (1) s'applique sur un premier côté latéral (4.1) du quatrième élément (4), et en ce que la deuxième échelle (SK2) pour la mesure d'angles et le marquage de lecture (M) sont disposés sur l'élément respectif (4, 1) de telle manière que le marquage de lecture (M) pointe sur la valeur de la deuxième échelle (SK2), qui correspond à l'angle à mesurer (α) entre des branches (O1, O2), qui sont appliquées sur le troisième élément (3) et sur le quatrième élément (4), respectivement, lorsque le premier élément (1) et le quatrième élément (4) sont orientés parallèlement l'un à l'autre et qu'un deuxième côté latéral (1.2) du premier élément (1) s'applique sur un deuxième côté latéral (4.2) du quatrième élément (4).

2. Mètre pliant (G) selon la revendication 1, **caractérisé en ce que** les deux échelles (SK1, SK2) se prolongent au moins sur un cinquième élément du mètre pliant (G).

3. Mètre pliant (G) selon la revendication 1 ou 2, **caractérisé en ce que** la première échelle (SK1) est disposée dans la région du premier côté latéral (4.1) au moins du quatrième élément (4) et la deuxième échelle (SK2) est disposée dans la région du deuxième côté latéral (4.2) au moins du quatrième élément (4).

4. Mètre pliant (G) selon l'une quelconque des revendications précédentes, **caractérisé en ce qu'**une distance entre un deuxième axe de pivotement (S2), par lequel le deuxième élément (2) et le troisième élément (3) sont fixés l'un à l'autre de façon pivotante, et un bord du côté frontal du troisième élément (3) situé le plus près du deuxième axe de pivotement (S2), est au maximum aussi grande que la plus petite distance entre le deuxième axe de pivotement (S2) et un premier côté latéral (2.1) du deuxième élément (2) et/ou **en ce qu'**une distance entre le deuxième axe de pivotement (S2) et un bord du côté frontal du deuxième élément (2) situé le plus près du deuxième axe de pivotement (S2) est au maximum aussi grande que la plus petite distance entre le deuxième axe de pivotement (S2) et un premier côté latéral (3.1) du troisième élément (3).

5. Mètre pliant (G) selon l'une quelconque des revendications précédentes, **caractérisé en ce qu'**une distance entre un troisième axe de pivotement (S3), par lequel le troisième élément (3) et le quatrième élément (4) sont fixés l'un à l'autre de façon pivotante, et un bord du côté frontal du troisième élément (3) situé le plus près du troisième axe de pivotement (S3) et un bord du côté frontal du quatrième élément (4) situé le plus près du troisième axe de pivotement (S3) est égale ou au maximum aussi grande que la plus petite valeur de la distance entre le troisième axe de pivotement (S3) et un premier côté latéral (3.1) du troisième élément (3) et un premier côté latéral (4.1) du quatrième élément (4).

6. Mètre pliant (G) selon l'une quelconque des revendications précédentes, **caractérisé en ce que** ledit au moins un marquage de lecture (M) s'étend sur une largeur totale du premier élément (1).

7. Mètre pliant (G) selon l'une quelconque des revendications précédentes, **caractérisé par** au moins une échelle de mesure de longueur sur les éléments (1, 2, 3, 4).

8. Mètre pliant (G) selon la revendication 7, **caractérisé en ce que** l'échelle de mesure de longueur est disposée sur un côté plat du mètre pliant (G) situé à l'opposé des échelles pour la mesure d'angles (SK1, SK2).

9. Procédé pour la mesure d'angles au moyen d'un mètre pliant (G) selon l'une quelconque des revendications 1 à 8,
- dans lequel un premier élément (1) et un quatrième élément (4) du mètre pliant (G) sont orientés parallèlement l'un à l'autre, dans lequel un premier côté latéral (1.1) ou un deuxième côté latéral (1.2) du premier élément (1) est appliqué sur un premier côté latéral (4.1) du quatrième élément (4), dans lequel un premier côté latéral (2.1) d'un deuxième élément (2) et un deuxième côté latéral (4.2) du quatrième élément (4) sont respectivement appliqués sur une branche (01, 02) de l'angle à mesurer (α) et dans lequel une valeur d'angle est lue à la position d'une première échelle (SK1) pour la mesure d'angles au moins sur le quatrième élément (4), sur laquelle pointe un marquage de lecture (M) sur le premier élément (1), ou
- dans lequel un premier élément (1) et un quatrième élément (4) du mètre pliant (G) sont orientés parallèlement l'un à l'autre et sont appliqués l'un sur l'autre avec des deuxièmes côtés latéraux (1.2, 4.2), dans lequel des premiers côtés latéraux (3.1, 4.1) d'un troisième élément (3) et du quatrième élément (4) sont respectivement appliqués sur une branche (O1, O2) de l'angle à mesurer (α) et dans lequel une valeur d'angle est lue à la position d'une deuxième échelle (SK2) pour la mesure d'angles au moins sur le quatrième élément (4), sur laquelle pointe un marquage de lecture (M) sur le premier élément (1).
